# EUROPÄISCHE PATENTSCHRIFT

(11) **EP 2 815 139 B1**
(45) Veröffentlichungstag und Bekanntmachung des Hinweises auf die Patenterteilung: **20.04.2016**
(21) Anmeldenummer: 13703347.8
(22) Anmeldetag: 29.01.2013
(51) Int. Cl.: F16C 17/03

(54) **RADIALLAGER**
RADIAL BEARING
PALIER RADIAL

(30) Priorität: 14.02.2012 DE 102012002713
(43) Veröffentlichungstag der Anmeldung: 24.12.2014
(73) Patentinhaber: Voith Patent GmbH, 89522 Heidenheim (DE)
(72) Erfinder: RUDOLPH, Ralph, 87549 Kranzegg (DE); FUCHS, Andreas, 87459 Pfronten-Ried (DE); SPÖRL, Klaus-Peter, 87439 Kempten (DE)
(74) Vertreter: Dr. Weitzel & Partner
(86) Internationale Anmeldenummer: PCT/EP2013/051607
(87) Internationale Veröffentlichungsnummer: WO 2013/120687

(56) Entgegenhaltungen:
- EP-A2- 1 369 605
- JP-A- S58 102 819
- JP-A- S58 180 815
- JP-A- 2009 257 349
- US-A- 4 247 157
- US-A1- 2011 019 950

## Beschreibung

Die Erfindung betrifft ein Radiallager gemäß dem Oberbegriff von Anspruch 1. Es handelt sich somit um ein Lager, das eine Mehrzahl von Kippsegmenten aufweist, die eine Welle lagern. Dieses wird als Kippsegmentlager bezeichnet und zählt zu den hydrodynamischen Gleitlagern.

Auf folgende Patente wird hiermit verwiesen:
US 2011/0019950 A1 offenbart ein gattungsbildendes Radiallager
US 5 738 447 A
US 6 485 182 B
DE 60110751 T2
DE 69503138 T2
EP 2 339 192 A1
DE 19514830 C2
GB 2285491 A
DE 602004003239 T2
EP 1859175 B1
CH 558481 A.

Die rotordynamischen Eigenschaften von Turbo-Getrieben werden im Wesentlichen durch die Eigenschaften der Lagerung bestimmt und durch die Geometrie der Wellen bestimmt. Bei sehr hohen Wellendrehzahlen kommen hier vor allem Radialkippsegmentlager zum Einsatz. Die Entwicklung im Turbo-Getriebebau führt zu größerer Leistungsübertragung, größerer Leistungsdichte und höheren Drehzahlen bei gleichzeitiger Forderung höherer Effizienz und stabilerem Schwingungsverhalten. Um diesen wachsenden Anforderungen gerecht zu werden, ist ein Radialkippsegmentlager notwendig, das mit höherer Drehzahl und Lagerpressung, mit geringerer Lagerspielveränderung im instationären Betrieb, geringen Lagerverformungen und mit verbesserten Schwingungseigenschaften im Turbo-Getriebe-System betrieben werden kann.

Die genannten Eigenschaften des Lagers hängen voneinander ab. Beispielsweise ergibt sich durch eine höhere Lagerpressung die Möglichkeit, das Lager kleiner auszuführen und die Effizienz des Lagers zu erhöhen.

Beim Anfahren von Turbo-Getrieben kann es infolge des instationären Betriebes lokal zu starken, thermischen Dehnungen bei geringer Lagerkühlung kommen, die im Kippsegmentlager zu unzulässig kleinen Lagerspielen führen.

Die genannten Radialkippsegmentlager kommen insbesondere für überkritisch drehende Wellen in Betracht, deren Schwingungsverhalten durch die Steifigkeits- und Dämpfungseigenschaften der Lager entscheidend beeinflusst werden.

Der Erfindung liegt die Aufgabe zugrunde, ein Radiallager gemäß dem Oberbegriff von Anspruch 1 derart zu gestalten, dass die derzeitigen Grenzen für den Einsatz eines Radialkippsegmentlagers hinsichtlich Lagerpressung, Effizienz und Schwingungsverhalten überschritten werden können.

Diese Aufgabe wird mittels eines Radiallagers gemäß Anspruch 1 gelöst.

Ein erfindungsgemäßes Radiallager umfasst ein Gehäuse, eine entlang einer Lagerachse verlaufende Gehäusebohrung, mehrere Kippsegmente, die zum Lagern einer Welle um die Lagerachse herum angeordnet sind und jeweils eine radial äußere Lagerfläche aufweisen, mit der sich die Kippsegmente auf eine Tragfläche am Gehäuse abstützen, wobei die radial äußere Lagerfläche eines jeden Kippsegmentes und die Tragfläche einander gegenüberliegend angeordnet sind. Jedes Kippsegment ist relativ zum Gehäuse beweglich angeordnet.

Erfindungsgemäß bildet eine erste der Flächen mit einer ersten Schnittebene senkrecht zur Lagerachse eine erste Schnittkurve. Die erste Schnittkurve ist konvex gekrümmt und weist einen ersten Hauptkrümmungsradius auf, und die zweite Fläche bildet mit der Schnittebene senkrecht zur Lagerachse eine zweite Schnittkurve. Die zweite Schnittkurve ist entsprechend konkav gekrümmt und weist einen zweiten Hauptkrümmungsradius auf, wobei der Betrag des ersten Hauptkrümmungsradius der ersten Fläche kleiner ist als der Betrag des zweiten Hauptkrümmungsradius der zweiten Fläche. Die erste Fläche bildet mit einer zweiten Schnittebene parallel zur Lagerachse eine dritte Schnittkurve. Die dritte Schnittkurve ist konvex gekrümmt und weist einen ersten Nebenkrümmungsradius auf. Die zweite Fläche bildet mit der zweiten Schnittebene parallel zur Lagerachse eine vierte Schnittkurve. Die vierte Schnittkurve ist entsprechend konkav gekrümmt oder nicht gekrümmt und weist einen zweiten Nebenkrümmungsradius auf oder weist entsprechend keine Krümmung auf, wobei sich die beiden Nebenkrümmungsradien voneinander unterscheiden.

Somit können für die beiden Schnittkurven der Nebenkrümmung Krümmungskombinationen konvex zu konkav oder konvex zu eben oder konkav zu konvex oder eben zu konvex vorliegen.

Das Verhältnis der beiden Nebenkrümmungsradien im Berührpunkt der Tragfläche mit der radial äußeren Lagerfläche kann abhängig von der Krümmungskombination derartig ausgeführt ist, dass zwischen der radial äußeren Lagerfläche und der Tragfläche stets nur ein Berührpunkt vorliegt.

Der wesentliche Gedanke der Erfindung besteht darin, die radial äußere Lagerfläche des einzelnen Kippsegmentes und die Tragfläche des Druckblocks derart zu gestalten, dass diese beiden im Wesentlichen eine Punktlagerung miteinander bilden, dabei aber mindestens die Lagersteifigkeit einer Linienberührung konventioneller Radialkippsegmentlager erhalten bleibt und die Kippsegmente im Betrieb lediglich durch die hydrodynamische Krafteinwirkung des Schmierfilmdruckes zwischen der Welle und dem Kippsegment und dem Kontakt zwischen Kippsegment und Druckblock, welcher feststehend am Gehäuse befestigt ist, in der gewünschten Position in Umfangsrichtung verharren.

Entscheidend für diesen Gleichgewichtszustand ist, dass der zweite Hauptkrümmungsradius im Berührpunkt der Tragfläche mit der radial äußeren Lagerfläche in einer Schnittebene senkrecht zur Lagerachse kleiner ist als der Abstand zwischen Lagerachse und dem Berührpunkt.

Das jeweilige Kippsegment in unverkippter Stellung soll in wenigstens zwei Richtungen kippfähig sein, nämlich zum einen um eine erste Kippachse, die zur Längsachse des Radiallagers, im Folgenden Lagerachse genannt, parallel ist, und zum anderen um eine zweite Kippachse, die winklig beziehungsweise senkrecht zur ersten Kippachse und damit winklig beziehungsweise senkrecht zur Lagerachse verläuft.

Die beiden Kippachsen müssen dabei in Bezug auf die Lagerachse nicht zwingend ortsfest sein, sondern können sich infolge einer relativen Dreh- oder Abwälzbewegung zwischen der jeweiligen Lagerfläche und der Tragfläche relativ zur Lagerachse, insbesondere mit dem jeweiligen Kippsegment, mitbewegen. Diese Kippfähigkeit ermöglicht die Ausgleichsbewegung der Welle im Radiallager und wird mittels der erfindungsgemäßen Haupt- und/oder Nebenkrümmung erzielt. Letztere kann sich dabei über das gesamte Element (Kippsegment, Druckblock), sozusagen von Rand zu Rand, oder aber nur teilweise über das Element erstrecken. Hierdurch wird erreicht, dass das einzelne Kippsegment gewissermaßen eine unbeschränkte Kippfreiheit aufweist und keine lokalen Überbelastungen oder Kantentragen auftritt.

Da sich jeweils Hauptkrümmungsradius und Nebenkrümmungsradius zweier gegenüberliegender Flächen untereinander unterscheiden, ergibt sich ausgehend von einem theoretischen Berührpunkt beider Flächen ein zunehmender Abstand dieser zueinander.

Dabei können sich bevorzugt auch die Hauptkrümmungsradien sowie die Nebenkrümmungsradien ein und derselben Fläche voneinander unterscheiden.

Dies bedeutet, dass beispielsweise das jeweilige Kippsegment, in der Hauptkrümmung einen anderen Radius aufweist als in der Nebenkrümmung. Gleiches gilt analog bei variierenden Radien der Haupt- und Nebenkrümmung der genannten Flächen, wie noch nachfolgend ausgeführt wird.

Bevorzugt wird die radial äußere Lagerfläche eines jeden Kippsegments unmittelbar, das bedeutet ohne Zwischenschaltung weiterer Elemente, von der Tragfläche getragen. Der Begriff unmittelbar schließt ein, dass im Betrieb des Gleitlagers die einander zugewandten Flächen, nämlich die radial äußere Lagerfläche und die Tragfläche, durch einen Schmiermittelfilm voneinander getrennt sein können und sich damit nicht direkt berühren. Wenn nachfolgend von Abrollen oder Abwälzen der einen Fläche auf der anderen Fläche die Rede ist, so ist auch immer gemeint, dass sich zwischen diesen ein solcher Schmiermittelfilm befindet. Ein Kippsegment weist bevorzugt genau eine, insbesondere zusammenhängende Fläche auf, nämlich die radial äußere Lagerfläche, mittels welcher es ebenfalls von genau einer Gegenfläche, nämlich der Tragfläche getragen wird. Die Schnittebenen sind jeweils so zu legen, dass die Kurve, die sich aus dem Schnitt der Schnittebene mit der jeweiligen Fläche ergibt, mittig zu den Rändern der Fläche liegt. Dies muss jedoch nicht zwingend der Fall sein. So können die Schnittebenen derart gelegt werden, dass auch bezogen auf die Ränder der Flächen unsymmetrische Krümmungen realisierbar sind.

Weiter variiert der Haupt- und/oder Nebenkrümmungsradius wenigstens einer der besagten Flächen.

Ein ergänzender, erfindungsgemäßer Gedanke besteht darin, ein Schmier- und Kühlsystem zur Kühlung der Kippsegmente vorzusehen, damit die Lagertemperatur im Betrieb geringer ausfällt, als bei konventionellen Radialkippsegmentlagern. Das Kühlsystem besitzt die Merkmale, das frische (relativ kühle) Kühlmedium möglichst direkt und gerichtet auf die radial innere Lagerfläche des Kippsegments aufzubringen und das vom Lager erwärmte Kühlmedium möglichst direkt nach der Erwärmung wieder aus dem Lager herauszuleiten.

Die Kühlung der Kippsegmente kann bevorzugt dadurch erfolgen, dass zwischen zwei Kippsegmenten eine Ölzufuhrleiste zum Zuführen von Kühl- oder Schmiermittel zu einem von den jeweiligen Kippsegmenten und der Welle gebildeten Spalt vorgesehen wird. Dabei mündet die Ölzufuhrleiste im Bereich des Spalts, wobei deren Mündungsfläche auf eine Kante des Kippsegments, insbesondere die in Drehrichtung der Welle gesehen zuerst von der Welle überstrichene Einlaufkante gerichtet ist.

Dabei kann eine Mehrzahl von Ölzufuhrleisten vorgesehen sein, welche über dem Umfang des Radiallagers verteilt sind, sodass jeweils zwischen zwei benachbarten Kippsegmenten eine solche Ölzufuhrleiste angeordnet ist.

Ferner kann die wenigstens eine Ölzufuhrleiste gegen die Radiale der Drehachse der Welle beziehungsweise der Lagerachse geneigt sein.

Bevorzugt können im Bereich der Einlaufkante in wenigstens einem Kippsegment Aussparungen zum Zuführen von aus der Ölzuführleiste austretenden Öl zu dem von der Welle und dem Kippsegment gebildeten Spalt vorgesehen sein. Die Ölzufuhrleiste umfasst dabei Ölkanäle. So können die Mündungsöffnungen der Ölzufuhrleiste bzw. der Ölkanäle sich mit den Aussparungen in Richtung der Längsachse der Mündungsöffnungen teilweise oder vollständig überdecken. Somit verlaufen die Längsachsen der Aussparungen der Kippsegmente koaxial bzw. parallel zu der Längsachse der Ölzufuhrleiste. Auch könnten die Flächen der Aussparungen und der Mündungsöffnungen deckungsgleich ausgeführt sein. Die Aussparungen können als insbesondere symmetrische Nuten ausgeführt sein. Auch die Längsachsen oder Symmetrieachsen der Aussparungen können mit der Radialen zusammenfallen oder parallel zu ihr verlaufen. Dies kann auch zusätzlich oder alternativ für die Ölkanäle der Ölzufuhrleiste der Fall sein.

Gemäß einer weiteren Ausführungsform umfasst das Radiallager eine erste Ölsperre zum Abgreifen von relativ heißem Schleppöl aus einem von dem jeweiligen Kippsegment und der Welle gebildeten Spalt, wobei die erste Ölsperre zwischen zwei Kippsegmenten angeordnet ist und mit ihrem freien Ende von radial außen in den Bereich des Spalts hineinragt. Die erste Ölsperre greift somit einen Großteils des heißen, aus dem Spalt austretenden Öls ab.

Auch kann das Radiallager eine weiteren Ölsperre zum Zuleiten von relativ kaltem Frischöl zu einem von den jeweiligen Kippsegment und der Welle gebildeten Spalt umfassen, wobei die weitere Ölsperre zwischen zwei Kippsegmenten angeordnet ist und mit ihrem freien Ende von radial außen in einen Zwischenraum zwischen Gehäuse und Kippsegment hineinragt.

Bevorzugt kann das freie, radial innere Ende wenigstens einer der Ölsperren sich an oder radial außerhalb der radial inneren Lagerfläche des Kippsegments, an das es unmittelbar angrenzt, befinden. Dabei kann insbesondere das freie Ende der einen Ölsperre in Umfangsrichtung der Welle zum freien Ende der weiteren Ölsperre beabstandet und insbesondere in Drehrichtung der Welle gesehen vor dem freien Ende der weiteren Ölsperre angeordnet sein.

Gemäß einer weiteren Ausführungsform sind dabei die eine und die weitere Ölsperre untereinander axial beabstandet an jeweils ein und derselben Ölzufuhrleiste angeordnet.

Bevorzugt kann sich das radial innere Ende wenigstens einer der Ölsperren an oder radial außerhalb der radial inneren Lagerfläche befinden, wobei bevorzugt die Ölsperren an der Ölzufuhrleiste, insbesondere an deren radial innerem Ende form-, kraft- oder stoffschlüssig befestigt oder mit dieser oder dem Gehäuse einteilig ausgeführt sind.

Weitere Merkmale ergeben sich aus der folgenden Beschreibung. Darin ist im Einzelnen folgendes dargestellt:
- Figur 1: zeigt in isometrischer Darstellung ein Radialkippsegmentlager.
- Figur 2: zeigt das Lager gemäß Figur 1 in Draufsicht auf eine Stirnseite.
- Figur 3: zeigt das Lager gemäß Figur 1 in einer Seitenansicht.
- Figur 4: ist ein Axialschnitt A-A durch das Lager gemäß Figur 1.
- Figur 5: ist ein Radialschnitt B-B durch das Lager gemäß Figur 1.
- Figur 6: zeigt in vergrößertem Maßstab eine Einzelheit einer Ölzufuhrleiste.
- Figur 7: zeigt in vergrößerter Darstellung ein Kippsegment mit einem Druckblock.
- Figur 8: zeigt in einer räumlichen Darstellung die Krümmungen der radial äußeren Lagerfläche sowie der Tragfläche.
- Figur 9: zeigt symbolisch in einer räumlichen Darstellung den Krümmungsradiusverlauf der radial äußeren Lagerfläche sowie der Tragfläche.

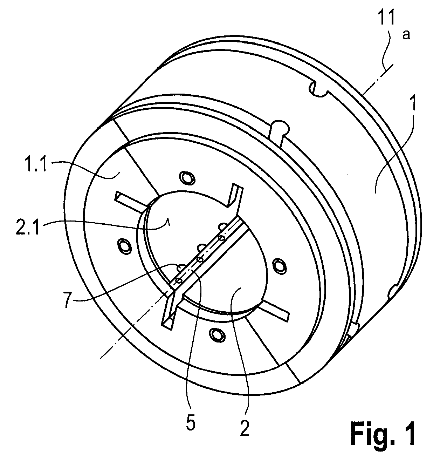

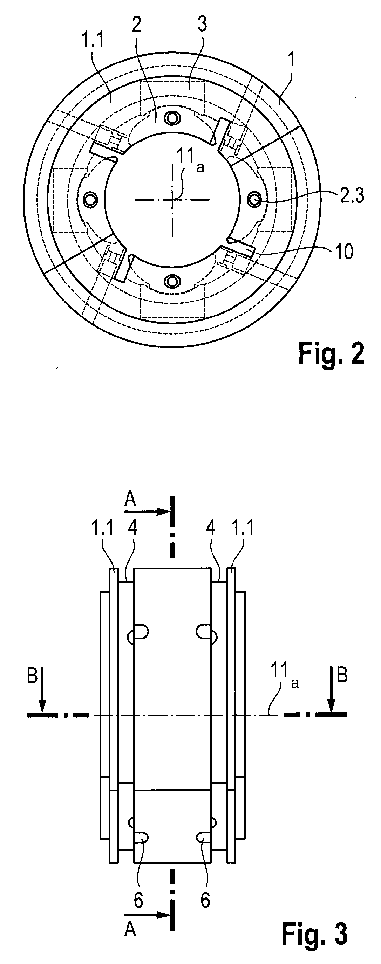

Das Radiallager umfasst ein Gehäuse 1 mit einer Bohrung. Man könnte auch sagen, das Gehäuse 1 besteht aus einer zylindrischen Hülse. In vorliegendem Falle ist diese aus zwei Halbschalen aufgebaut. Siehe die Figuren 1 und 2. Es könnten auch mehrere Teilschalen sein.

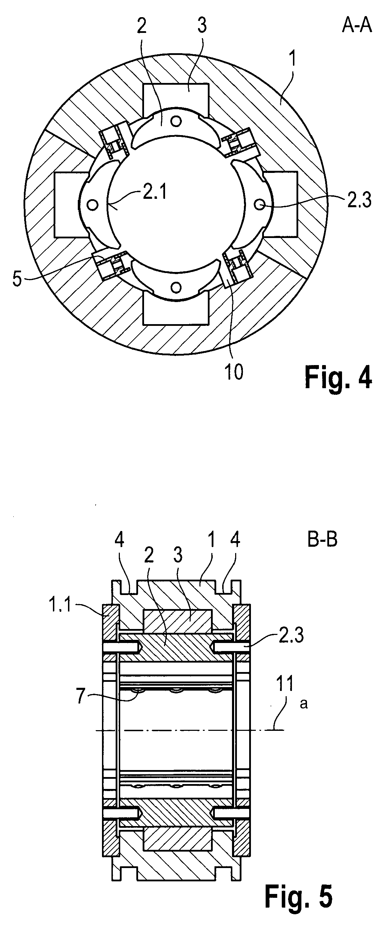

Die ganz wesentlichen Elemente sind aus den Figuren 4 und 7 bis 9 erkennbar. Hier sind in erster Linie die Kippsegmente 2 zu nennen. Letztere sind um die Lagerachse 11a herumgruppiert angeordnet. Im vorliegenden Fall handelt es sich um vier Kippsegmente. Es könnten aber auch mehr oder weniger sein.

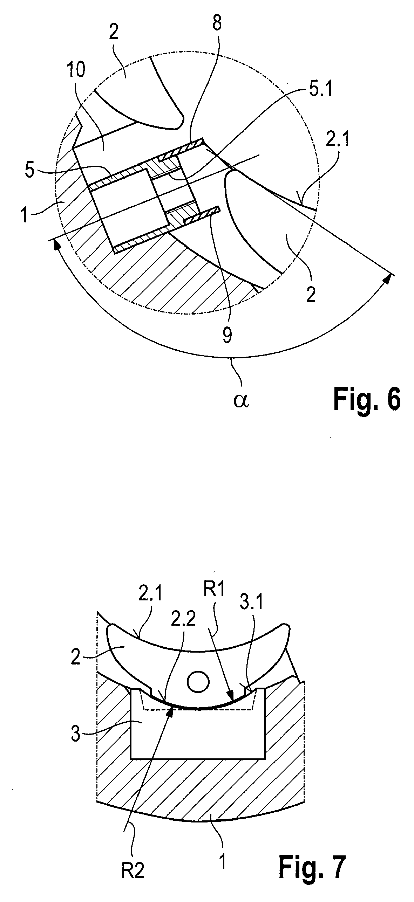

Jedes Kippsegment 2 weist, wie besonders gut aus Figur 7 zu erkennen ist, eine radial innere Lagerfläche 2.1 und eine radial äußere Lagerfläche 2.2 auf. Die radial äußere Lagerfläche 2.2 ist von einer Tragfläche 3.1 am Gehäuse 1 getragen. Die radial äußere Lagerfläche 2.2 sowie die Tragfläche 3.1 sind einander gegenüberliegend angeordnet. Die Tragfläche 3.1 wird hier von einem Druckblock 3 ausgebildet, sodass jedes Kippsegment 2 von einem Druckblock 3, bevorzugt unmittelbar getragen wird.

Der Druckblock 3 ist im vorliegenden Fall in das Gehäuse 1 eingelassen. Dieser könnte jedoch anderweitig an dem Gehäuse 1 befestigt sein oder einteilig mit dem Gehäuse 1 ausgeführt sein.

Die Figuren 1 bis 3 lassen unter anderem Seitendeckel 1.1 des Gehäuses 1 erkennen. Die Seitendeckel 1.1 tragen Segmenthaltestifte 2.3, die in die Kippsegmente 2 eingelassen sind. Die Segmenthaltestifte 2.3 sorgen im Nichtbetrieb, bei der Montage und beim Transport des Radiallagers dafür, dass die Kippsegmente 2 nicht aus dem Lager herausfallen, sich aber im Rahmen des in den Seitendeckeln 1.1 eingearbeiteten radialen und tangentialen Spiels bewegen können. Die Segmenthaltestifte 2.3 sind somit im Wesentlichen in radialer und tangentialer Richtung zur Lagerachse 11a formschlüssig mit den Seitendeckeln 1.1 im Nichtbetrieb des Radiallagers verbindbar. Die Segmenthaltestifte 2.3 beeinträchtigen die Kippsegmente 2 nicht bei deren räumlichen Ausgleichsbewegungen im Betrieb. Die Segmenthaltestifte 2.3 sind für den Betrieb des Lagers nicht erforderlich.

Analog ist es auch denkbar, dass die Segmenthaltestifte 2.3 fest mit den Seitendeckeln 1.1 verbunden sind und zu zugehörigen Bohrungen in den Kippsegmenten 2 Spiel aufweisen.

Die radial innere Lagerfläche 2.1 der Kippsegmente 2 dient zum Lagern einer hier nicht gezeigten Welle. Letztere wird vom Gehäuse 1 umschlossen. Die radial innere Lagerfläche 2.1 besitzt einen Radius, der größer als der zugehörige Radius der Welle an der Lagerstelle ist. Ein Radienverlauf wäre aber ebenso denkbar. Die Welle ist gegenüber dem Gehäuse 1 mittels der Kippsegmente 2 in Radialrichtung gelagert.

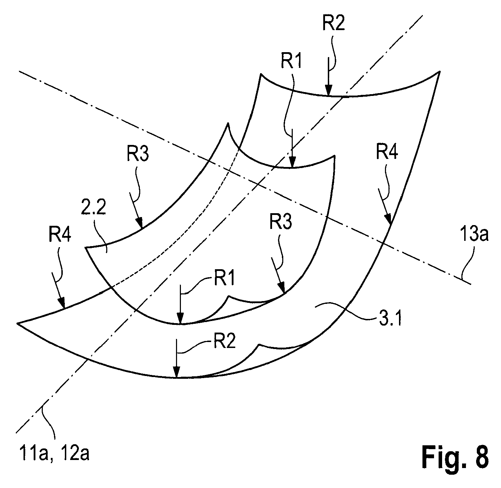

Damit das Radiallager im Betrieb die räumlichen Bewegungen der Welle aufnehmen und ausgleichen kann, ist jedes Kippsegment 2 relativ zum Gehäuse 1 beweglich angeordnet. Figur 8 zeigt dabei nur die beiden Flächen 2.2, 3.1 und zwar in einer Ausgangsstellung, in welcher die Drehachse 12a der Welle mit der Lagerachse 11a zusammenfällt. Dies muss jedoch nicht zwingend der Fall sein. Beide Achsen 11a, 12a könnten auch parallel zueinander verlaufen. Achse 13a verläuft senkrecht zur Lagerachse 11a.

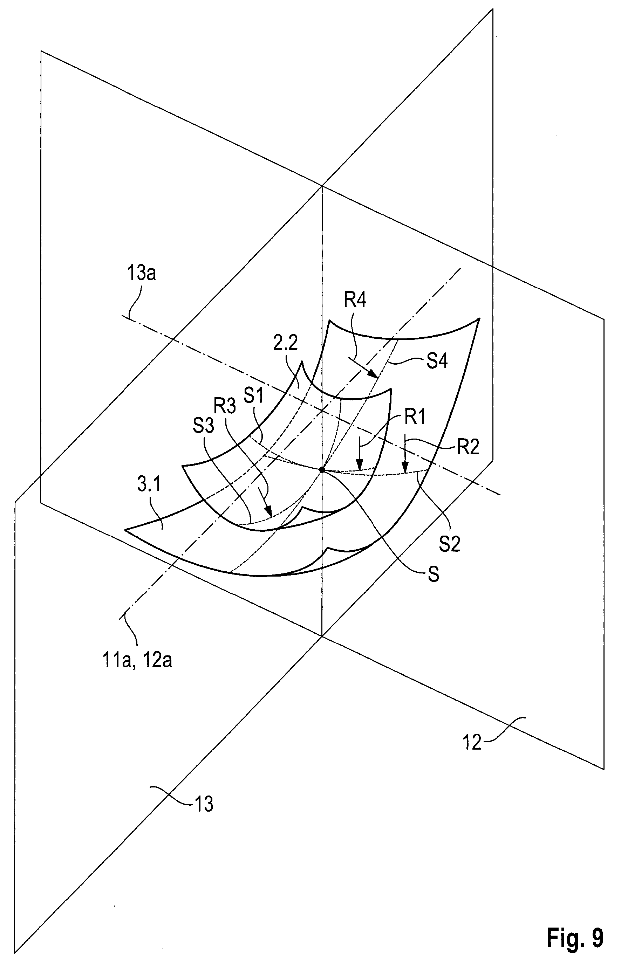

Die Darstellung der Fig. 8 und 9 ist nicht maßstäblich, sodass insbesondere der erfindungsgemäße Unterschied der Krümmungsradien von beiden Flächen 2.2, 3.1 nur angedeutet ist.

Wie in Figur 9 gezeigt ist, bildet eine erste der Flächen 2.2, 3.1, hier die radial äußere Lagerfläche 2.2 mit einer ersten Schnittebene 12 senkrecht zur Lagerachse 11a eine erste Schnittkurve S1. Letztere ist konvex gekrümmt und weist einen ersten Hauptkrümmungsradius R1 auf. Die zweite Fläche, hier die Tragfläche 3.1, bildet mit der Schnittebene 12 senkrecht zur Lagerachse 11a eine zweite Schnittkurve S2, welche entsprechend konkav gekrümmt ist und einen zweiten Hauptkrümmungsradius R2 aufweist.

Wenigstens eine der Flächen 2.2, 3.1 weist zusätzlich zu der Hauptkrümmung noch eine Nebenkrümmung auf. So bildet die radial äußere Lagerfläche 2.2, wie in Figur 9 dargestellt, mit einer zweiten Schnittebene 13 senkrecht zur Lagerachse 11a eine dritte Schnittkurve S3. Schnittkurve S3 ist konvex gekrümmt und weist einen ersten Nebenkrümmungsradius R3 auf. Entsprechend bildet die Tragfläche 3.1 mit der zweiten Schnittebene 13 eine vierte Schnittkurve S4 aus, welche konkav gekrümmt ist und einen zweiten Nebenkrümmungsradius R4 aufweist. Alternativ kann die Tragfläche 3.1 auch frei von einer Nebenkrümmung sein (nicht dargestellt) und somit einen zweiten Nebenkrümmungsradius R4 aufweisen, der gegen unendlich geht.

Somit werden die Flächen 2.2, 3.1 von zwei senkrecht zueinander verlaufenden Schnittebenen 12 und 13 geschnitten, wobei die Schnittebene 12 senkrecht auf der Lagerachse 11a und die Schnittebene 13 wiederum parallel zu der Lagerachse 11a steht und im vorliegenden Fall durch die Lagerachse 11a verläuft. Die Schnittkurven der jeweiligen Fläche ergeben miteinander geschnitten einen Schnittpunkt. Berühren sich beide Schnittpunkte der gegenüberliegenden Flächen 2.2, 3.1, so werden sie im Folgenden als Berührpunkt S bezeichnet.

Die beiden, in den Figuren 8 und 9 gezeigten und senkrecht zueinander verlaufenden Achsen 11a und 12a könnten auch, wie eingangs beschrieben, als Kippachsen des Kippsegments 2 aufgefasst werden.

Die Schnittebene 13 verläuft durch die Lagerachse 11a und den Berührpunkt S. Die Schnittebene 12 verläuft senkrecht zur Schnittebene 13 durch den Berührpunkt S und die Achse 13a.

Das Kippsegment 2 kann zwei Bewegungen der Welle, eine Hauptbewegung und eine Nebenbewegung, unabhängig voneinander ausgleichen. Die Hauptbewegung beschreibt die Welle bei Parallelität der Drehachse 12a zur Lagerachse 11a in radialer Richtung beim Abrollen des ersten Hauptkrümmungsradius R1 der radial äußeren Lagerfläche 2.2 auf dem zweiten Hauptkrümmungsradius R2 der Tragfläche 3.1.

Die Nebenbewegung beschreibt die Welle beim Abrollen des ersten Nebenkrümmungsradius R3 der radial äußeren Lagerfläche 2.2 auf dem zweiten Nebenkrümmungsradius R4 der Tragfläche 3.1 durch Verkippen der Wellenachse 12a zur Lagerachse 11a, wobei die beiden Achsen in der Schnittebene 13 bleiben. Die Kippachse ist hierbei die Achse 13a.

Indem beide Bewegungen unabhängig voneinander überlagert werden, kann jedes Kippsegment 2 jede Wellenbewegung in vorgegebenen Grenzen ausgleichen.

In der Schnittebene 12, in der die Abrollradien der Hauptbewegung abgebildet sind, beschreibt die Schnittkurve S1 der radial äußeren Lagerfläche 2.2 stets einen konvexen Verlauf und die Schnittkurve S2 der Tragfläche 3.1 stets einen konkaven Verlauf. Hierbei ist der Betrag des ersten Hauptkrümmungsradius R1 stets kleiner als der Betrag des zweiten Hauptkrümmungsradius R2.

In Fig. 9 sind die Schnittkurven S3 und S4 in der Schnittebene 13, in der die Abrollradien der Nebenbewegung abgebildet sind, für die radial äußere Lagerfläche 2.2 mit konvexen Verlauf und für die Tragfläche 3.1 beispielhaft mit konkaven Verlauf dargestellt. Hierbei ist der Betrag des dritten Nebenkrümmungsradius R3 stets kleiner als der Betrag des vierten Nebenkrümmungsradius R4.

Unabhängig von den in den Figuren dargestellten Ausführungsformen sind verschiedene Kombinationen der beiden Flächen 2.2, 3.1 hinsichtlich der Ausgestaltung der Nebenkrümmung denkbar.

Für diese Nebenbewegung sind in der Schnittebene 13 auch folgende Linienkonturen der radial äußeren Lagerfläche 2.2 und Tragfläche 3.1 denkbar (Fälle 3 und 4 zeigen nicht zur Erfindung gehörende Ausführungen):

| | Schnittkurven in der Schnittebene 13 | | |
|---|---|---|---|
| | Lagerfläche 2.2 (R3) | Tragfläche 3.1 (R4) | Radienverhältnis |
| Fall 1 (Fig. 8 und 9) | konvex | konkav | \|R3\| < \|R4\| ^{*)} |
| Fall 2 | konvex | eben | |
| Fall 3 | konkav | konvex | \|R3\| > \|R4\| ^{*)} |
| Fall 4 | eben | konvex | |

| | | | |
|---|---|---|---|
| ^{*)} \|R\| entspricht dem Betrag von R | | | |

Der Krümmungsverlauf der Schnittkurven sowohl in der ersten Schnittebene 12 (Hauptbewegung), hier als Hauptkrümmungsradius bezeichnet, als auch in der zweiten Schnittebene 13 (Nebenbewegung), hier als Nebenkrümmungsradius bezeichnet, können variieren und müssen nicht konstant sein. Wie in Fig. 9 dargestellt, kann beispielweise der Betrag des ersten Nebenkrümmungsradius R3 der hier konvex gekrümmten Lagerfläche 2.2 mit zunehmendem Abstand vom Schnittpunkt/Berührpunkt S abnehmen. Alternativ oder zusätzlich kann der Betrag des Nebenkrümmungsradius R4 der hier konkav dargestellten Tragfläche 3.1 mit zunehmendem Abstand vom Schnittpunkt/Berührpunkt S zunehmen.

Gleiches gilt für den Hauptkrümmungsradius:
Der Betrag des ersten Hauptkrümmungsradius R1 der hier konvex gekrümmten Lagerfläche 2.2 kann beispielsweise mit zunehmenden Abstand vom Schnittpunkt/Berührpunkt S (siehe Fig. 9) abnehmen. Alternativ oder zusätzlich kann der Betrag des zweiten Hauptkrümmungsradius R2 der hier konkav dargestellten Tragfläche 3.1 mit zunehmendem Abstand vom Schnittpunkt/Berührpunkt S zunehmen.

Durch die hier beschriebenen Variationen der Krümmungsradien entlang der Linienkonturen der Schnittkurven S1-S4 in den Schnittebenen 12 und 13 wird eine erwünschte, hohe radiale Steifigkeit des Lagers bei gleichzeitiger Beweglichkeit des Kippsegments 2 durch eine nahezu Punktberührung realisiert.

Im Betrieb des Kippsegmentlagers wird aufgrund des sich einstellenden Lagerkräftegleichgewichts das Kippsegment 2 in Umfangsrichtung zur Lagerachse 11a automatisch positioniert und gleichzeitig ein Verkanten der Welle im Radiallager vermieden.

Die Bewegungsfreiheit der Kippsegmente 2 in axialer Richtung wird durch die Seitendeckel 1.1 (Figuren 1-3), welche auch geteilt ausgeführt sein können, begrenzt. Um die Reibung zwischen den Kippsegmenten 2 und den Seitendeckeln 1.1 im Rahmen der Bewegungsfreiheit der Kippsegmente 2 gering zu halten, können dünne Scheiben auf die Segmenthaltestifte 2.3 zwischen Seitendeckel und Kippsegment 2 montiert sein.

Um die radiale Steifigkeit des Radiallagers weiter zu erhöhen, sollte das Material des Druckblockes 3, unabhängig von den bisher in den Figuren dargestellten Ausführungsformen, einen Elastizitätsmodul aufweisen, der größer als jener von Stahl ist. Werte von mehr als 200 GPa sind anzustreben, beispielsweise 250 GPa oder mehr. Als Material kommt zum Beispiel eine technische Keramik in Betracht. Die Herstellung des Radiallagers mit Komponenten auf Basis keramischer Werkstoffe wird durch die Verwendung von Druckblöcken 3 erleichtert. Die Druckblöcke 3 und/oder die Kippsegmente 2 kommen vollständig oder teilweise für die Ausführung in technischer Keramik in Betracht. Technische Keramik hat den Vorteil einer sehr guten Wärmeleitfähigkeit. Dies führt zu einer raschen Abfuhr der im Schmierfilm dissipierten Energie, und damit zu einer deutlichen Reduzierung der maximalen Lagertemperatur. Ein weiterer Vorteil von technischer Keramik gegenüber den bisher verwendeten Segmentwerkstoffen ist der deutlich kleinere Wärmeausdehnungskoeffizient. Damit wird die Gefahr einer unzulässigen Reduktion des Lagerspiels infolge von instationären, thermischen Verformungen und den damit entstehenden hohen Lagertemperaturen (Temperaturüberschwinger), die zur Abschaltung der Anlage führen können, insbesondere beim Anfahren des Turbo-Getriebes oder im instationären Betrieb verringert.

Das für das erfindungsgemäße Radiallager verwendete Schmier- beziehungsweise Kühlmittel ist in der Regel Öl. Es kann aber auch ein anderes Schmierbeziehungsweise Kühlmittel, wie zum Beispiel Wasser, zur Anwendung kommen. Beispielhaft wird in der Beschreibung Öl als Schmier- beziehungsweise Kühlmittel verwendet.

Insbesondere die Figuren 2, 4, 5 und 6 veranschaulichen das erfindungsgemäße Ölversorgungssystem.

Zur Ölversorgung eines jeden, von einem jeweiligen Kippsegment 2 und der nicht gezeigten Welle gebildeten Spalts, besitzt das Gehäuse wenigstens eine, hier zwei Ringnuten 4. Siehe Figur 5. Letztere verlaufen bevorzugt im Wesentlichen in Umfangsrichtung des Gehäuses 1 und befinden sich entlang der Lagerachse 11a gesehen im Wesentlichen außerhalb der Mitte des Radiallagers. Die Ringnuten 4 können, wie dargestellt, auch symmetrisch zur Lagermitte am Außendurchmesser des Gehäuses 1 mit maximalem gegenseitigem Abstand angeordnet sein. Weiterhin sind Ölzufuhrleisten 5 vorgesehen. Siehe die Figuren 1, 4 und 6. Die Ölzufuhrleisten 5 stehen mit den Ringnuten 4 über Ölkanäle 6 in leitender Verbindung.

Die Ölzufuhrleisten 5 wie auch die Ölkanäle 6 sind gegenüber einem Radialstrahl geneigt - siehe in Figur 6 den Neigungswinkel α. Man könnte auch sagen, dass die Längsachse der Ölkanäle 6 in einem achssenkrechten Schnitt durch die Lagerachse 11a nach Art von Sekanten an den von der Mantelfläche der Welle begrenzten Kreis verläuft. Dabei ist der Winkel α der Winkel zwischen der Ölzufuhrrichtung und der Tangentialebene an die Kippsegmentkontaktfläche zur Welle durch die Einlaufkante. Unter Einlaufkante ist jene Kante des Kippsegments 2 gemeint, die in Drehrichtung der Welle zuerst von der Welle überstrichen wird. Als Auslaufkante wird jene Kante desselben Kippsegments 2 bezeichnet, welche der Einlaufkante in Drehrichtung der Welle nachgeordnet ist. Der Winkel α ist größer als 90°. Durch die genannte Neigung wird ein besonders wirksames Einspritzen des Öles in den Spalt garantiert. Jede Ölzufuhrleiste 5 weist Gewindebohrungen 5.1 zum Einschrauben von hier nicht gezeigten Dosierschrauben auf. Letztere können nach Art von Düsen ausgeführt sein. Durch den Einsatz einer solchen Dosierschraube mit einer vorbestimmten Mündungsfläche lässt sich die Ölmenge den Betriebsparametern anpassen. Aussparungen 7 an der Einlaufkante eines jeden Kippsegmentes 2 steigern die Wirksamkeit der Ölzufuhr. Dabei ist jeder Dosierschraube eine Aussparung 7 zugeordnet. Aussparung 7 und Dosierschraube überdecken sich in Richtung Längsachse der Ölkanäle 6.

Um ein Überschwappen von heißem Schleppöl, das über die Auslaufkante aus dem Schmierspalt zwischen Welle und Segment in Richtung auf die Einlaufkante eines in Drehrichtung der Welle nachgeordneten Kippsegmentes 2 strömt, zu reduzieren, ist die Ölzufuhrleiste 5 mit einer elastischen Schleppölsperre 8 versehen. Um ein Übertreten des heißen Öls vom Segmentrücken in den Öleinlaufbereich zu reduzieren, ist eine zweite elastische Ölsperre 9 vorgesehen.

Dadurch, dass die Schleppölsperre 8 zwischen zwei Kippsegmenten 2, also zwischen einer Auslaufkante des einen und einer Einlaufkante des anderen Kippsegments angeordnet ist und mit ihrem freien Ende von radial außen in den Bereich des Spalts hineinragt, kann diese eine Vermischung von heißem Schleppöl mit jenem, über die Ölzufuhrleiste 5 zugeführten kalten Frischöl deutlich vermindern und damit die beiden Ölströme besonders gut voneinander trennen.

Die Ölsperre 9 dient weiterhin dem Zuführen des relativ kalten Frischöls in den jeweiligen Spalt, der zwischen Kippsegment und Welle ausgebildet ist. Auch diese Ölsperre 9 kann zwischen den beiden Kippsegmenten 2 angeordnet sein und mit ihrem freien Ende von radial außen in einen Zwischenraum zwischen Gehäuse 1 und Kippsegment 2 hineinragen.

Bevorzugt kann das freie Ende der einen und/oder der weiteren Ölsperren 8, 9 im Wesentlichen radial außerhalb einer radial inneren Fläche 2.1 des Kippsegments angeordnet sein. Dabei kann das freie Ende der einen Ölsperre 8 in Umfangsrichtung zum freien Ende der weiteren Ölsperre 9 beabstandet angeordnet sein und in Drehrichtung der Welle, gesehen vor dem freien Ende der weiteren Ölsperre 9, wie in der Figur 6 dargestellt, angeordnet sein. Die Ölzufuhrleiste 5 sowie die eine und/oder die weitere Ölsperre 8, 9 können sich entlang der gesamten Länge des Kippsegments 2 in Richtung der Lagerachse 11a erstrecken. Dies ist jedoch nicht zwingend erforderlich. Auch können eine oder beide der Ölsperren 8, 9 an der Ölzufuhrleiste 5 insbesondere an deren radial inneren Ende befestigt oder mit diesem einteilig ausgeführt sein. Die Ölzufuhrleiste 5 kann auch einteilig mit dem Gehäuse 1 ausgebildet sein. Entlang der Ölzufuhrleiste 5 kann eine Mehrzahl von zueinander beabstandeter Dosierschrauben vorgesehen sein, die mit dem Ölkanal 6 strömungsleitend verbunden sind.

Das an der Ölsperre 8 umgelenkte, relativ heiße Schleppöl kann über Ölablaufnuten 10, welche in dem Gehäuse 1 und/oder in den Seitendeckel 1.1 eingebracht sind, aus dem Lager abgeführt werden. Pro Kippsegment 2 beziehungsweise pro Ölzufuhrleiste 5 kann jeweils eine solche Ölablaufnut 10 am Umfang um die Lagerachse 11a verteilt vorgesehen sein. Natürlich ist auch eine davon abweichende Anzahl denkbar. Die Ölzufuhrleiste 5 und/oder die eine Ölsperre 8 kann dabei die Ölablaufnut 10 begrenzen. Letztere ist/sind in Drehrichtung der Welle gesehen der Ölablaufnut 10 nachgeordnet. Man könnte auch sagen, dass die Ölablaufnut 10 auf die Auslaufkante des Kippsegments 2 gerichtet ist, um darüber aus dem Spalt ablaufendes relativ heißes Schleppöl 5 aufzufangen.

Die Vorteile der Erfindung lassen sich wie folgt zusammenfassen:
Aufgrund der räumlichen Ausgleichsbewegung der Kippsegmente wird ein Verkanten der Welle im Lager vermieden und die Belastbarkeit erhöht sowie die maximal auftretende Temperatur abgesenkt. Die spezielle Form der Balligkeit an der Rückseite der Kippsegmente in axialer Richtung sowie die konvexe Segmentgeometrie in Verbindung mit dem Werkstoff technische Keramik, aus dem die Druckblöcke und/oder die Kippsegmente gefertigt werden, ergibt eine sehr hohe radiale Steifigkeit. Das ist die Grundlage für verbesserte rotordynamische Eigenschaften der Lagerung. Da die zu verwendende technische Keramik eine sehr gute Wärmeleitfähigkeit besitzt, ist somit auch die Grundlage für eine Reduzierung der maximalen Lagertemperatur gegeben. Ein weiterer Vorteil der technischen Keramik gegenüber den bisherigen Segmentwerkstoffen ist der deutlich kleinere Wärmeausdehnungskoeffizient. Damit lässt sich die Gefahr von Lagerspielverkleinerungen durch Temperaturüberschwinger im instationären Betrieb deutlich reduzieren.

Die Anordnung der Ölzufuhrleisten 5 mit den Ölsperren 8, 9 zum Lenken des Schmier- und Kühlmittels in Kombination mit der Anordnung der Ringnuten 4 und Ölablaufnuten 10 sorgt für eine weiterer Reduzierung der mittleren Kippsegmenttemperatur im Betrieb des Radiallagers. Die Anordnung der Ringnuten 4 am Gehäuseumfang außerhalb der axialen Lagermitte sorgt für eine direkte Kraftübertragung und somit für eine Erhöhung der Kippsegmentabstützfähigkeit.

### Bezugszeichenliste

- 1: Gehäuse
- 1.1: Seitendeckel
- 2: Kippsegment
- 2.1: radial innere Lagerfläche
- 2.2: radial äußere Lagerfläche
- 2.3: Segmenthaltestift
- 3: Druckblock
- 3.1: Tragfläche
- 3.2: Mittellinie
- 4: Ringnut
- 5: Ölzufuhrleiste
- 5.1: Gewindebohrung
- 6: Ölkanal
- 7: Aussparung
- 8: Sperre
- 9: Sperre
- 10: Ölablaufnut
- 11a: Lagerachse
- 12a: Drehachse der Welle
- 13a: Achse senkrecht auf die Lagerachse 11a
- 12, 13: Schnittebenen
- R1: Krümmungsradius der radial äußeren Lagerfläche 2.2 quer zur Lagerachse
- R2: Krümmungsradius der Tragfläche 3.1 quer zur Lagerachse
- R3: Krümmungsradius der radial äußeren Lagerfläche 2.2 senkrecht zur Lagerachse
- R4: Krümmungsradius der Tragfläche 3.1 senkrecht zur Lagerachse
- S: Schnittpunkt
- S1, S2: Schnittkurven in Ebene 12
- S3, S4: Schnittkurven in Ebene 13

## Patentansprüche

1. Radiallager, umfassend:
1.1 ein Gehäuse (1);
1.2 eine entlang einer Lagerachse (11a) verlaufende Gehäusebohrung;
1.3 mehrere Kippsegmente (2), die zum Lagern einer Welle um die Lagerachse (11a) herum angeordnet sind und jeweils eine radial äußere Lagerfläche (2.2) aufweisen, mit der sich die Kippsegmente (2) auf eine Tragfläche (3.1) am Gehäuse (1) abstützen;
1.4 die radial äußere Lagerfläche (2.2) eines jeden Kippsegmentes (2) und die Tragfläche (3.1) sind einander gegenüberliegend angeordnet;
1.5 jedes Kippsegment (2) ist relativ zum Gehäuse (1) beweglich angeordnet;
1.6 eine erste (2.2) der Flächen (2.2, 3.1) bildet mit einer ersten Schnittebene (12) senkrecht zur Lagerachse (11a) eine erste Schnittkurve (S1); die erste Schnittkurve (S1) ist konvex gekrümmt und weist einen ersten Hauptkrümmungsradius (R1) auf, und
1.7 die zweite Fläche (3.1) bildet mit der Schnittebene (12) senkrecht zur Lagerachse (11a) eine zweite Schnittkurve (S2); die zweite Schnittkurve (S2) ist entsprechend konkav gekrümmt und weist einen zweiten Hauptkrümmungsradius (R2) auf, wobei der Betrag des ersten Hauptkrümmungsradius (R1) der ersten Fläche (2.2) kleiner ist als der Betrag des zweiten Hauptkrümmungsradius (R2) der zweiten Fläche (3.1); und
1.8 die erste Fläche (2.2) bildet mit einer zweiten Schnittebene (13) parallel zur Lagerachse (11) eine dritte Schnittkurve (S3); die dritte Schnittkurve (S3) ist konvex gekrümmt und weist einen ersten Nebenkrümmungsradius (R3) auf, und
1.9 die zweite Fläche (3.1) bildet mit der zweiten Schnittebene (13) parallel zur Lagerachse (11a) eine vierte Schnittkurve (S4); die vierte Schnittkurve (S4) ist entsprechend konkav gekrümmt oder nicht gekrümmt und weist einen zweiten Nebenkrümmungsradius (R4) auf oder weist entsprechend keine Krümmung auf;
1.10 die beiden Nebenkrümmungsradien (R3, R4) unterscheiden sich voneinander; der Hauptkrümmungsradius (R1, R2) und/oder der Nebenkrümmungsradius (R3, R4) wenigstens einer der beiden Flächen (2.2, 3.1) variiert;
1.11 **gekennzeichnet durch** das folgende Merkmal: der Hauptkrümmungsradius (R1, R2) und/oder der Nebenkrümmungsradius (R3, R4) der zweiten Fläche (3.1) nimmt ab mit zunehmendem Abstand vom Schnittpunkt, den die beiden Schnittebenen (12, 13) mit der zweiten Fläche (3.1) bilden.

2. Radiallager nach einem der Ansprüche 1, **dadurch gekennzeichnet, dass** der zweite Hauptkrümmungsradius (R2) der zweiten Fläche (3.1) im Berührpunkt in der Schnittebene (12) senkrecht zur Lagerachse (11a) kleiner ist als der Abstand zwischen der Lagerachse (11a) und dem Berührpunkt.

3. Radiallager nach einem der Ansprüche 1 oder 2, **dadurch gekennzeichnet, dass** das Kippsegment (2) in Umfangsrichtung dadurch positioniert wird, dass die resultierende, hydrodynamische Kraft an der radial inneren Lagerfläche (2.1) mit der Reaktionskraft an der radial äußeren Lagerfläche (2.2), welche lediglich nur auf einem punktförmigen Kontakt zwischen der radial äußerer Lagerfläche (2.2) und Tragfläche (3.1) entsteht, im Gleichgewicht ist.

4. Radiallager nach einem der Ansprüche 1 bis 3, **dadurch gekennzeichnet, dass** die Tragfläche (3.1) auf einem Druckblock (3) angeordnet ist, der an dem Gehäuse (1) befestigt ist, insbesondere in dieses eingelassen ist, oder einteilig mit dem Gehäuse (1) ausgeführt ist.

5. Radiallager nach einem der Ansprüche 1 bis 4, **dadurch gekennzeichnet, dass** die Kippsegmente (2) und/oder die Druckblöcke (3) ein Material aufweisen, dessen Elastizitätsmodul größer als 200 GPa ist, insbesondere 250 GPa oder mehr beträgt.

6. Radiallager nach einem der Ansprüche 1 bis 5, **dadurch gekennzeichnet, dass**
6.1 die Schmier- und Kühlmittelversorgung des Radiallagers über mindestens eine Ringnut (4), die im Wesentlichen in Umfangsrichtung im Gehäuse (1) verläuft und sich in axialer Richtung im Wesentlichen nicht in Lagermitte befindet, erfolgt, und
6.2 die Schmier- und Kühlmittelversorgung des Kippsegments (2) über mindestens eine im Wesentlichen radial verlaufende Bohrung im Gehäuse (1), die Zugang zur Ringnut (4) hat, erfolgt.

7. Radiallager nach einem der Ansprüche 1 bis 6, **dadurch gekennzeichnet, dass** das Radiallager eine erste Ölsperre (8) zum Abgreifen von relativ heißem Schleppöl aus einem von dem jeweiligen Kippsegment (2) und der Welle gebildeten Spalt umfasst, wobei die erste Ölsperre (8) zwischen zwei Kippsegmenten (2) angeordnet ist und mit ihrem freien Ende von radial außen im Bereich des Spalts hineinragt.

8. Radiallager nach einem der Anspruche 1 bis 7, **dadurch gekennzeichnet, dass** das Radiallager eine weitere Ölsperre (9) zum Zuleiten von relativ kaltem Frischöl zu einem von dem jeweiligen Kippsegment (2) und der Welle gebildeten Spalt umfasst, wobei die weitere Ölsperre (9) zwischen zwei Kippsegmenten (2) angeordnet ist und mit ihrem freien Ende von radial außen in einen Zwischenraum zwischen Gehäuse (1) und Kippsegment (2) hineinragt.

9. Radiallager nach einem der Ansprüche 1 bis 8, **dadurch gekennzeichnet**,
9.1 dass zwischen zwei Kippsegmenten (2) eine Ölzufuhrleiste (5) zum Zuführen von Kühl- oder Schmiermittel zu einem von dem jeweiligen Kippsegment (2) und der Welle gebildeten Spalt angeordnet ist; wobei
9.2 die Ölzufuhrleiste (5) im Bereich des Spalts mündet und deren Mündungsfläche auf eine Kante des Kippsegments (2), insbesondere die in Drehrichtung der Welle gesehen zuerst von der Welle überstrichene Einlaufkante, gerichtet ist.

10. Radiallager nach einem der Ansprüche 1 bis 9, **dadurch gekennzeichnet, dass** mindestens ein Haltemittel (2.3) vorgesehen ist, damit das Kippsegment (2) während des Transportes oder der Montage nicht aus dem Gehäuse (1) heraus fällt.

11. Radiallager nach einem der Ansprüche 1 bis 10, **dadurch gekennzeichnet, dass** jeweils auf der axialen Gehäusefläche ein Seitendeckel (1.1), der geteilt ausgeführt sein kann und für jedes Kippsegment (2) mindestens eine Ölablaufnut (10) aufweisen kann, angebracht ist.

12. Radiallager nach einem der Ansprüche 9 bis 11, **dadurch gekennzeichnet, dass** wenigstens eines der Kippsegmente (2) im Bereich der Einlaufkante Aussparungen (7) zum Zuführen von aus der Ölzufuhrleiste (5) austretendem Öl in den Spalt aufweist.

13. Radiallager nach Anspruch 12, **dadurch gekennzeichnet, dass** die Ölzufuhrleiste (5) Mündungsöffnungen aufweist, welche sich mit den Aussparungen (7) in Richtung der Längsachse der Mündungsöffnungen überdecken.

14. Radiallager nach einem der Ansprüche 8 bis 13, **dadurch gekennzeichnet, dass** wenigstens eine der Ölsperren (8, 9) gegen die Radiale der Lagerachse (11a) geneigt ist.

15. Radiallager nach einem der Ansprüche 8 bis 14, **dadurch gekennzeichnet, dass** das radial innere Ende wenigstens einer der Ölsperren (8, 9) sich an oder radial außerhalb der radial inneren Lagerfläche (2.1) befindet, wobei insbesondere die Ölsperren (8, 9) an der Ölzufuhrleiste (5) angeordnet sind oder mit dieser oder dem Gehäuse (1) einteilig ausgeführt sind.

## Claims

1. A radial bearing, comprising:
1.1 a housing (1);
1.2 a housing borehole extending along a bearing axis (11 a);
1.3 multiple tilting pads (2), which are arranged about the bearing axis (11 a) to mount a shaft and each have a radial outer bearing surface (2.2), using which the tilting pads (2) are supported on a support surface (3.1) on the housing (1);
1.4 the radial outer bearing surface (2.2) of each tilting pad (2) and the support surface (3.1) are arranged opposite to one another;
1.5 each tilting pad (2) is arranged so it is movable in relation to the housing (1);
1.6 a first (2.2) of the surfaces (2.2, 3.1) forms a first section curve (S1) with a first section plane (12) perpendicular to the bearing axis (11 a); the first section curve (S1) is convexly curved and has a first main radius of curvature (R1), and
1.7 the second surface (3.1) forms a second section curve (S2) with the section plane (12) perpendicular to the bearing axis (11 a); the second section curve (S2) is correspondingly concavely curved and has a second main radius of curvature (R2), wherein the absolute value of the first main radius of curvature (R1) of the first surface (2.2) is less than the absolute value of the second main radius of curvature (R2) of the second surface (3.1); and
1.8 the first surface (2.2) forms a third section curve (S3) with a second section plane (13) parallel to the bearing axis (11 a) the third section curve (S3) is convexly curved and has a first secondary radius of curvature (R3), and
1.9 the second surface (3.1) forms a fourth section curve (S4) with the second section plane (13) parallel to the bearing axis (11 a); the fourth section curve (S4) is accordingly concavely curved or not curved and has a second radius of curvature (R4) or accordingly has no curvature;
1.10 the two secondary radii of curvature (R3, R4) differ from one another; the main radius of curvature (R1, R2) and/or secondary radius of curvature (R3, R4) of at least one of the two surfaces (2.2, 3.1) varies
1.11 **characterized by** the following feature:
the main radius of curvature (R1, R2) and/or the secondary radius of curvature (R3, R4) of the second surface (3.1) decreases with increasing distance from the intersection point, which the two section planes (12, 13) form with the second surface (3.1)

2. The radial bearing according to Claim 1, **characterized in that** the second main radius of curvature (R2) of the second surface (3.1) at the contact point in the section plane (12) perpendicular to the bearing axis (11 a) is less than the distance between the bearing axis (11 a) and the contact point.

3. The radial bearing according to one of Claims 1 or 2, **characterized in that** the tilting pad (2) is positioned in the circumferential direction **in that** the resulting hydrodynamic force on the radial inner bearing surface (2.1) is in equilibrium with the reaction force on the radial outer bearing surface (2.2), which only arises at a spot-shaped contact between the radial outer bearing surface (2.2) and support surface (3.1).

4. The radial bearing according to one of Claims 1 to 3, **characterized in that** the support surface (3.1) is arranged on a pressure block (3), which is fastened on the housing (1), in particular is embedded therein, or is embodied integrally with the housing (1).

5. The radial bearing according to one of Claims 1 to 4, **characterized in that** the tilting pads (2) and/or the pressure blocks (3) have a material, the modulus of elasticity of which is greater than 200 GPa, in particular is 250 GPa or more.

6. The radial bearing according to one of Claims 1 to 5, **characterized in that**
6.1 the lubricant and cooling supply of the radial bearing is performed via at least one ring groove (4), which extends essentially in the circumferential direction in the housing (1) and is located essentially not in the bearing center in the axial direction, and
6.2 the lubricant and cooling supply of the tilting pad (2) is performed via at least one essentially radially extending borehole in the housing (1), which has access to the ring groove (4).

7. The radial bearing according to one of Claims 1 to 6, **characterized in that** the radial bearing comprises a first oil barrier (8) for tapping relatively hot entrained oil from a gap formed by the respective tilting pad (2) and the shaft, wherein the first oil barrier (8) is arranged between two tilting pads (2) and protrudes with its free end from the radial outside into the region of the gap.

8. The radial bearing according to one of Claims 1 to 7, **characterized in that** the radial bearing comprises a further oil barrier (9) for supplying relatively cold fresh oil to a gap formed by the respective tilting pad (2) and the shaft, wherein the further oil barrier (9) is arranged between two tilting pads (2) and protrudes with its free end from the radial outside into an intermediate space between housing (1) and tilting pad (2).

9. The radial bearing according to one of Claims 1 to 8, **characterized in that**
9.1 an oil supply strip (5) for supplying coolant or lubricant to a gap formed by the respective tilting pad (2) and the shaft is arranged between two tilting pads (2); wherein
9.2 the oil supply strip (5) discharges into the region of the gap and the discharge surface area thereof is oriented onto an edge of the tilting pad (2), in particular the intake edge, which is first passed over by the shaft when viewed in the rotational direction of the shaft.

10. The radial bearing according to one of Claims 1 to 9, **characterized in that** at least one holding means (2.3) is provided, so that the tilting pad (2) does not fall out of the housing (1) during the transport or the installation.

11. The radial bearing according to one of Claims 1 to 10, **characterized in that** a side cover (1.1), which can be embodied as divided and can have at least one oil discharge groove (10) for each tilting pad (2), is attached in each case to the axial housing surface.

12. The radial bearing according to one of Claims 10 or 11, **characterized in that** at least one of the tilting pads (2) has recesses (7) in the region of the intake edge for supplying oil exiting from the oil supply strip (5) into the gap.

13. The radial bearing according to Claim 12, **characterized in that** the oil supply strip (5) has discharge openings, which overlap with the recesses (7) in the direction of the longitudinal axis of the discharge openings.

14. The radial bearing according to one of Claims 9 to 13, **characterized in that** at least one of the oil barriers (8, 9) is inclined in relation to the radial of the bearing axis (11 a).

15. The radial bearing according to one of Claims 8 to 14, **characterized in that** the radial inner end of at least one of the oil barriers (8, 9) is located on or radially outside the radial inner bearing surface (2.1), wherein in particular the oil barriers (8, 9) are arranged on the oil supply strip (5) or are embodied integrally therewith or with the housing (1).

## Revendications

1. Palier radial, comprenant :
1.1 un logement (1) ;
1.2 un alésage dans le logement, qui s'étend le long d'un axe de palier (11a) ;
1.3 plusieurs segments basculants (2) disposés autour de l'axe de palier (11 a) afin de soutenir un arbre et présentant chacun une surface d'appui extérieure dans le sens radial (2.2), avec laquelle les segments basculants (2) s'appuient sur une surface de portée (3.1) du logement (1) ;
1.4 la surface d'appui extérieure dans le sens radial (2.2) de chaque segment basculant (2) et la surface de portée (3.1) étant disposées l'une en face de l'autre ;
1.5 chaque segment basculant (2) étant disposé de façon mobile par rapport au logement (1) ;
1.6 une première surface (2.2) parmi les surfaces (2.2, 3.1) formant avec un premier plan d'intersection (12) perpendiculaire à l'axe de palier (11 a) une première courbe d'intersection (S1) ; la première courbe d'intersection (S1) ayant une courbure convexe et présentant un premier rayon de courbure principal (R1), et
1.7 la deuxième surface (3.1) formant avec le plan d'intersection (12) perpendiculaire à l'axe de palier (11 a) une deuxième courbe d'intersection (S2), la deuxième courbe d'intersection (S2) ayant une courbure concave correspondante et présentant un deuxième rayon de courbure principal (R2), la grandeur du premier rayon de courbure principal (R1) de la première surface (2.2) étant inférieure à la grandeur du deuxième rayon de courbure principal (R2) de la deuxième surface (3.1) ; et
1.8 la première surface (2.2) formant avec un deuxième plan d'intersection (13) parallèlement à l'axe de palier (11) une troisième courbe d'intersection (S3), la troisième courbe d'intersection (S3) ayant une courbure convexe et présentant un premier rayon de courbure secondaire (R3), et un premier rayon de courbure secondaire (R3), et
1.9 la deuxième surface (3.1) formant avec le deuxième plan d'intersection (13) parallèlement à l'axe de palier (11 a) une quatrième courbe d'intersection (S4), la quatrième courbe d'intersection (S4) ayant une courbure concave correspondante ou n'ayant pas de courbure et présentant un deuxième rayon de courbure secondaire (R4) ou ne présentant pas de courbure correspondante ;
1.10 les deux rayons de courbure secondaires (R3, R4) étant différents l'un de l'autre, le rayon de courbure principal (R1, R2) et/ou le rayon de courbure secondaire (R3, R4) d'au moins une des deux surfaces (2.2, 3.1) étant variable ;
**caractérisé en ce que** :
1.11 le rayon de courbure principal (R1, R2) et/ou le rayon de courbure secondaire (R3, R4) de la deuxième surface (3.1) diminuent avec l'augmentation de la distance par rapport au point d'intersection que les deux plans d'intersection (12,13) forment avec la deuxième surface (3.1).

2. Palier radial selon l'une des revendications 1, **caractérisé en ce que** le deuxième rayon de courbure principal (R2) de la deuxième surface (3.1) au point de contact dans le plan d'intersection (12) perpendiculaire à l'axe de palier (11a) est plus petit que la distance entre l'axe de palier (11a) et le point de contact.

3. Palier radial selon l'une des revendications 1 ou 2, **caractérisé en ce que** le segment basculant (2) est positionné dans le sens de la circonférence par le fait que la force hydrodynamique résultante exercée sur la surface d'appui intérieure dans le sens radial (2.1) est à l'équilibre avec la force de réaction sur la surface d'appui extérieure dans le sens radial (2.2), qui résulte seulement d'un contact ponctuel entre la surface d'appui extérieure dans le sens radial (2.2) et la surface de portée (3.1).

4. Palier radial selon l'une des revendications 1 à 3, **caractérisé en ce que** la surface de portée (3.1) est disposée sur un bloc d'appui (3) qui est fixé au logement (1), en particulier introduit dans celui-ci, ou réalisé d'une pièce avec le logement (1).

5. Palier radial selon l'une des revendications 1 à 4, **caractérisé en ce que** les segments basculants (2) et/ou les blocs d'appui (3) présentent un matériau dont le module d'élasticité est supérieur à 200 GPa et est en particulier de 250 GPa ou plus.

6. Palier radial selon l'une des revendications 1 à 5, **caractérisé en ce que**
6.1 l'alimentation en lubrifiant et liquide de refroidissement du palier radial passe par au moins une gorge annulaire (4) qui s'étend pour l'essentiel dans le sens de la circonférence dans le logement (1) et ne se trouve sensiblement pas au milieu du palier dans le sens axial, et
6.2 l'alimentation en lubrifiant et liquide de refroidissement du segment basculant (2) passe par au moins un alésage d'orientation sensiblement radiale dans le logement (1), qui a accès à la gorge annulaire (4).

7. Palier radial selon l'une des revendications 1 à 6, **caractérisé en ce que** le palier radial présente une première barrière à huile (8) pour capter l'huile entraînée relativement chaude provenant de l'interstice formé par le segment basculant (2) en question et l'arbre, la première barrière à huile (8) étant disposée entre deux segments basculants (2) et dépassant par son extrémité libre à l'extérieur au niveau de l'interstice.

8. Palier radial selon l'une des revendications 1 à 7, **caractérisé en ce que** le palier radial comprend une autre barrière à huile (9) destinée à acheminer de l'huile fraîche relativement froide vers un interstice formé par le segment basculant (2) en question et l'arbre, l'autre barrière à huile (9) étant disposée entre deux segments basculants (2) et dépassant par son extrémité libre vers l'extérieur dans le sens radial dans un espace formé entre le logement (1) et le segment basculant (2).

9. Palier radial selon l'une des revendications 1 à 8, **caractérisé en ce que**
9.1 il est prévu entre deux segments basculants (2) une réglette d'arrivée d'huile (5) destinée à amener du liquide de refroidissement ou du lubrifiant dans un interstice formé par le segment basculant (2) en question et l'arbre,
9.2 la réglette d'arrivée d'huile (5) débouchant au niveau de l'interstice et sa surface d'embouchure étant dirigée vers une arête du segment basculant (2), en particulier l'arête d'attaque qui est la première sur laquelle passe l'arbre dans le sens de rotation de l'arbre.

10. Palier radial selon l'une des revendications 1 à 9, **caractérisé en ce qu'**au moins un moyen de maintien (2.3) est prévu afin que le segment basculant (2) ne tombe pas du logement (1) pendant le transport ou le montage.

11. Palier radial selon l'une des revendications 1 à 10, **caractérisé en ce qu'**est disposé sur chaque surface axiale du logement un couvercle latéral (1.1) qui peut être partagé et qui peut présenter pour chaque segment basculant (2) au moins une gorge de sortie d'huile (10). d'huile (10).

12. Palier radial selon l'une des revendications 10 à 11, **caractérisé en ce qu'**au moins un des segments basculants (2) présente des découpes (7) au niveau de l'arête d'attaque pour amener de l'huile sortant de la réglette d'arrivée d'huile (5) dans l'interstice.

13. Palier radial selon la revendication 12, **caractérisé en ce que** la réglette d'arrivée d'huile (5) présente des ouvertures d'embouchure qui chevauchent les découpes (7) dans la direction de l'axe longitudinal des ouvertures d'embouchure.

14. Palier radial selon l'une des revendications 8 à 13, **caractérisé en ce qu'**au moins une des barrières à huile (8, 9) est inclinée vers la radiale de l'axe de palier (11 a).

15. Palier radial selon l'une des revendications 8 à 14, **caractérisé en ce que** l'extrémité intérieure dans le sens radial d'au moins une des barrières à huile (8, 9) se trouve sur la surface d'appui intérieure dans le sens radial (2.1) ou à l'extérieur dans le sens radial par rapport à celle-ci, les barrières à huile (8, 9) étant en particulier disposées sur la réglette d'arrivée d'huile (5) et étant réalisées d'un seul tenant avec celle-ci ou avec le logement (1).
